# EUROPEAN PATENT SPECIFICATION

(11) **EP 4 420 877 B1**
(45) Date of publication and mention of the grant of the patent: **04.11.2026**
(21) Application number: 23157986.3
(22) Date of filing: 22.02.2023
(51) Int. Cl.: B32B 37/26, B32B 38/06, B32B 3/30, B32B 21/04

(54) **METHOD OF PRODUCING A LAYERED MATERIAL WITH A SURFACE STRUCTURE**
VERFAHREN ZUR HERSTELLUNG EINES SCHICHTMATERIALS MIT EINER OBERFLÄCHENSTRUKTUR
PROCÉDÉ DE FABRICATION D'UN MATÉRIAU STRATIFIÉ AVEC UNE STRUCTURE DE SURFACE

(43) Date of publication of application: 28.08.2024
(73) Proprietor: surfactor Germany GmbH, 45141 Essen (DE)
(72) Inventor: Silventoinen, Ilpo, 45141 Essen (DE)
(74) Representative: Hoffmann Eitle

(56) References cited:
- EP-A1- 1 125 971
- EP-B1- 3 392 031
- KR-A- 20120 063 476

## Description

The present invention pertains to a method for producing a layered material with a surface structure.

Layered materials with surface structures allow for an improved friction over smooth surfaces and therefore provide an increased safety against slipping, in particular when used for flooring.

Layered materials can be manufactured by overlaying a substrate, typically a board, with a resin-containing carrier, e.g. a resin-impregnated film, and apply the well-known method of hot-pressing to establish a firm connection between the substrate and the film. It is also known to use press plates having a structured surface (profile), which serve as a negative to imprint a surface structure on the film. However, structured press plates are expensive, difficult to handle due to their weight, and often result in poor aesthetics of the final layered material.

Alternatively, press plates are used in conjunction with a wire mesh, that represents a removable intermediate layer between the press plates and the film.

KR 2012 0063476 A discloses a method of imparting a texture to a "cured powder coated surface" by hotpressing, wherein a surface structure is imparted by a release medium, which may be a substrate material, e.g., paper or film in sheet or web form, with a release coating. EP 1 125 971 A1 discloses a method of hot-pressing of a multi-layered material with a surface structure with resin-impregnated papers, wherein the top layer is contacted with a perforated metal sheet. EP 3 392 031 B1 discloses a method of manufacturing water repellent plywood panels, wherein a wire mesh is used to increase the surface roughness of the waterproofing layer.

However, the use of a mesh leads to prolonged press times and/or to an unsatisfying friction and wear resistance. Moreover, the use of meshes often leads to unsatisfying aesthetics, such as the formation of dust during the pressing process or irregularities of the surface structure.

It is therefore the objective of the present invention to provide a method of manufacturing layered materials with a structured surface that overcomes one or more of the aforementioned problems.

### SUMMARY OF THE INVENTION

The objective is solved by a method according to claim 1. Particularly advantageous embodiments of the invention are subject matter of the further independent or dependent claims.

The inventors found that at least one string with at least one section with a non-circular cross-section (non-circular section) can be used in an optimized pressing process to provide layered materials with surface structures. In this method, a resin is applied to a substrate, to which the at least one string with a non-circular section 10 is then contacted, thereby providing a layered formation. Subsequently, heat and pressure are applied (hot-pressing) to said layered formation, wherein the at least one string with a non-circular section 10 can serve as a negative for embossing a surface structure. After hot-pressing, the at least one string is removed from the layered material with a surface structure.

It was found that the method according to the invention advantageously can lead to a faster curing of the resin, whereby the hot-pressing time required to cure the resin can be significantly reduced; in particular, compared to the state-of-the-art methods (e.g. using wire meshes composed of round strings). Notably, the inventors in particular found that the string/s comprising a polymeric composition used in one method according to the invention provides superior curing than state-of-the-art methods with strings made of metal. This was surprising, as the main reason in the prior art to use metal wire meshes are short hot-pressing times, due to the high heat conductivity of the material.

Surprisingly, by the method according to the invention the hot-pressing time can be reduced without diminishing the product quality of the so produced layered material.

Further surprisingly, it was found that by the method according to the invention less dust particles are generated during the manufacturing process. This is advantageous, since such dust particles, resulting from blistering of the curing or cured resin during the hot-pressing, makes cumbersome cleaning steps of the equipment or the layered material necessary. Consequently, the method according to the invention requires fewer maintenance stops for cleaning of the pressing equipment.

Overall, the method according to the invention provides means for manufacturing such layered materials with a reduced energy consumption and thus higher efficacy.

Furthermore, the inventors found, that the layered material according to the invention exhibits fewer irregularities than those available from state-of-the-art methods. Thus, the layered materials according to the invention advantageously display superior aesthetics. Besides, they can exhibit an improved wear resistance, moisture resistance and/or static friction coefficients. Furthermore, a formation comprising a substrate, resin and at least a string as defined in claim 1 is disclosed. Also, the use of string/s with a non-circular section for a method of embossing a surface structure onto a combination comprising resin and a substrate is disclosed. In an additional aspect the invention relates to a method of manufacturing a layered material with a surface structure as defined in claim 13.

Furthermore, the layered material obtained or obtainable from the method according to the invention is disclosed.

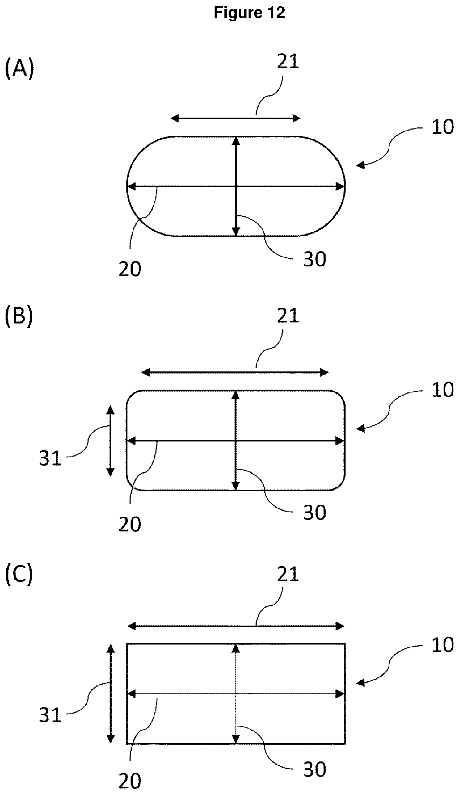

In a preferred embodiment of the invention the string comprises at least one planar surface, preferably at least two planar surfaces. Examples of a non-circular cross-section with at least two planar surfaces is shown in Fig. 12. More preferably the string is essentially flat. Even more preferably, the cross-section of the string has a rectangular shape.

Preferably, the string/s with a non-circular section is/are used as a mesh, preferably a mesh with a weave pattern. The mesh is preferably tightly knit, such that neighboring string/s of either weft or preferably warp are in contact with each other. A mesh with a weave pattern is preferably a woven article.

Surprisingly, the inventors also found that the resin, in particular a resin-impregnated carrier (film), bonds to the substrate, which comprises a hydrophobic composition on its surface, when producing a layered material with a surface structure with the method according to the invention. This is not possible with state-of-the-art methods, when the layered material is embossed with a surface structure; instead the resin does not bond to the substrate.

In a further embodiment of the invention, the formation formed from resin and the substrate further comprises a layer composed of a plastic polymer material. The polymer in this plastic polymer material is preferably a polyamide (PA), preferably selected from the group consisting of PA 6, PA 66, and PA 69. Most preferably the polyamide is PA 6.

The resin in the method according to the invention is preferably a thermosetting resin. In preferred embodiments, the resin is a phenolic resin, more preferably a resole resin.

In a preferred embodiment of the invention the carrier is a paper, more preferably kraft paper.

### BRIEF DESCRIPTION OF THE FIGURES

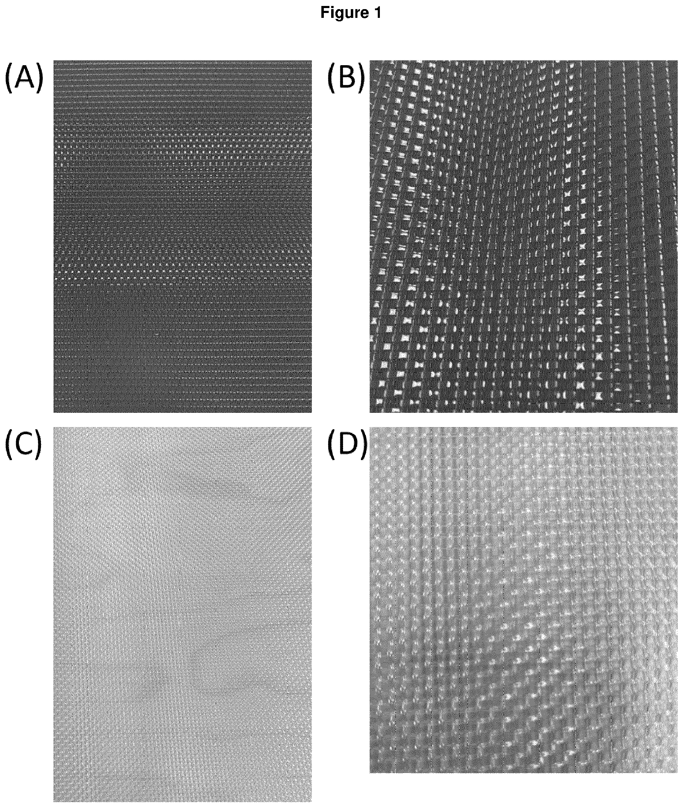

**Fig. 1** shows photographic images of woven meshes used in the production of layered materials with strings according to the invention (A, B) and for comparative examples (C, D). Close-ups of these woven meshes as used according to the invention (A) and the comparative example (C) are shown in Figures 1B and 1D, respectively.

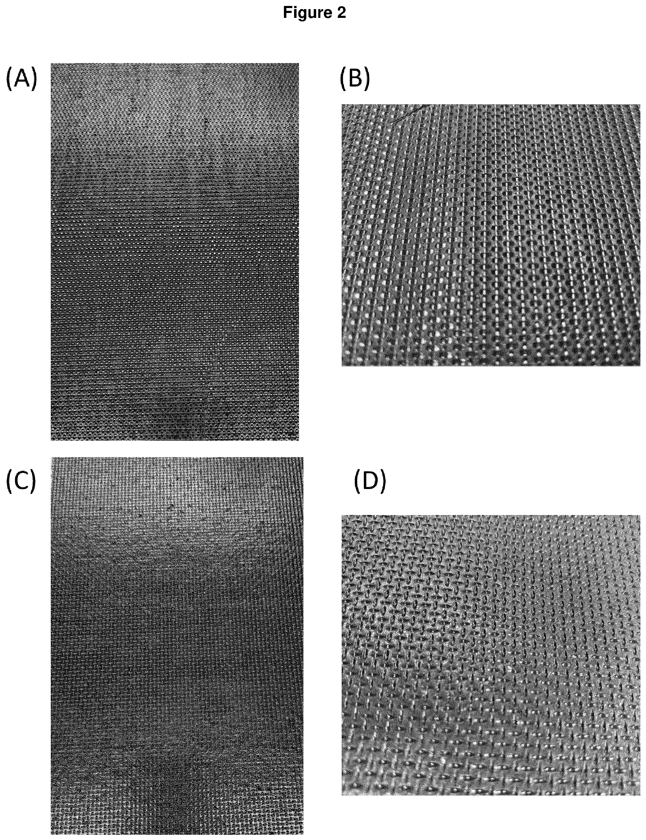

**Fig. 2** shows photographic images of a layered material produced by a method according to the invention (A, B) and by a comparative method (C, D) using the same starting materials. Close-ups of the layered materials according to the invention (A) and the comparative example (C) are shown in Figures 2B and 2D, respectively.

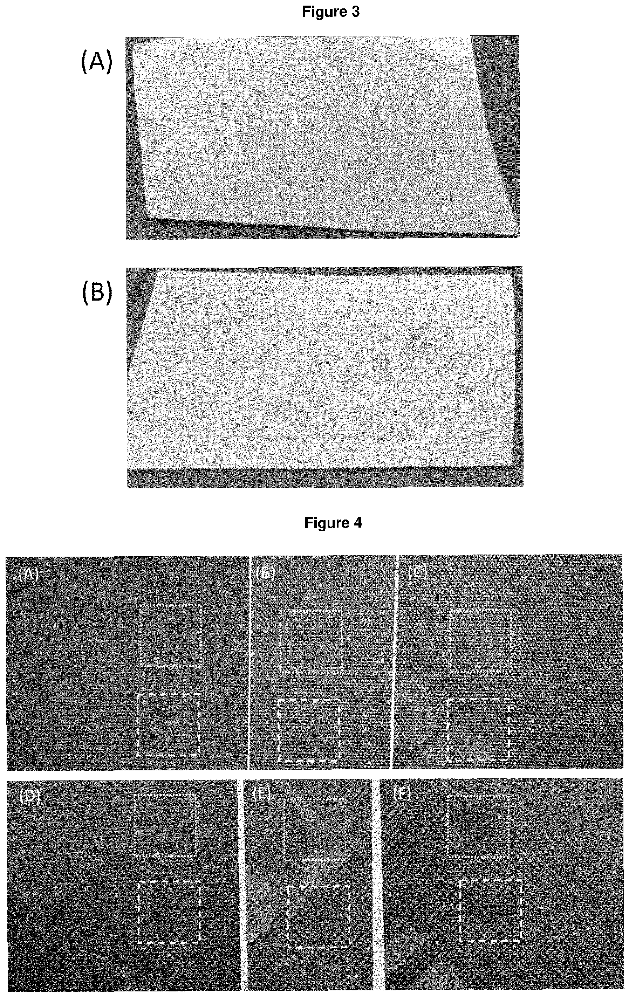

**Fig. 3** shows the results of the dust retention tests, i.e. photographic images of adhesive tape which had been applied to a layered material according to the invention (A) and a comparative example (B).
**Fig. 4** shows layered materials obtained according to the invention (A-C) and from a comparative method (D-F), wherein flawed substrates were used in the manufacturing process. The flaws were created by milling the substrates from the bottom-side prior to hot-pressing leaving only two (dotted box) or three (dashed box) plies in certain places.

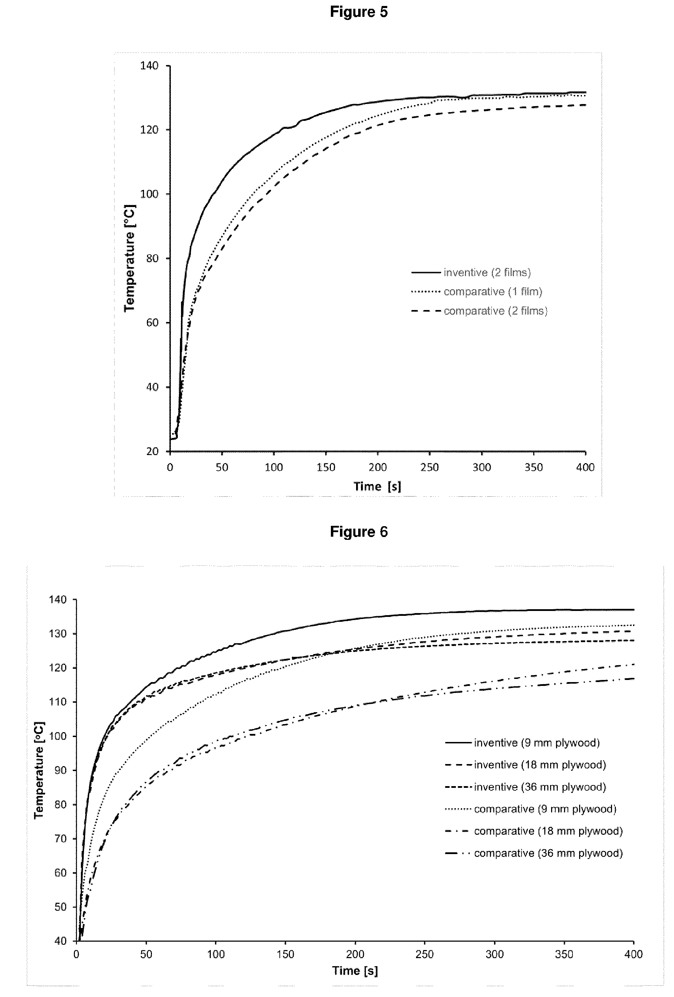

**Fig. 5** shows the change of temperature between the board and a resin-impregnated paper when a layered material is manufactured according to the invention or a comparative method. Lines are solid for the method according to the invention with two films, dotted and dashed for the comparative examples with one and two films, respectively.
**Fig. 6** shows the change of temperature between the board and a resin-impregnated paper when a layered structure is manufactured according to the invention or a comparative method, wherein substrates of different thicknesses (9 mm, 18 mm, 36 mm) were used. Lines are solid (9mm), long-dash (18 mm), and short-dash (36 mm) for examples according to the invention, and dotted (9mm), dash-dot (18 mm), and dash-dot-dot (36 mm) for comparative examples.

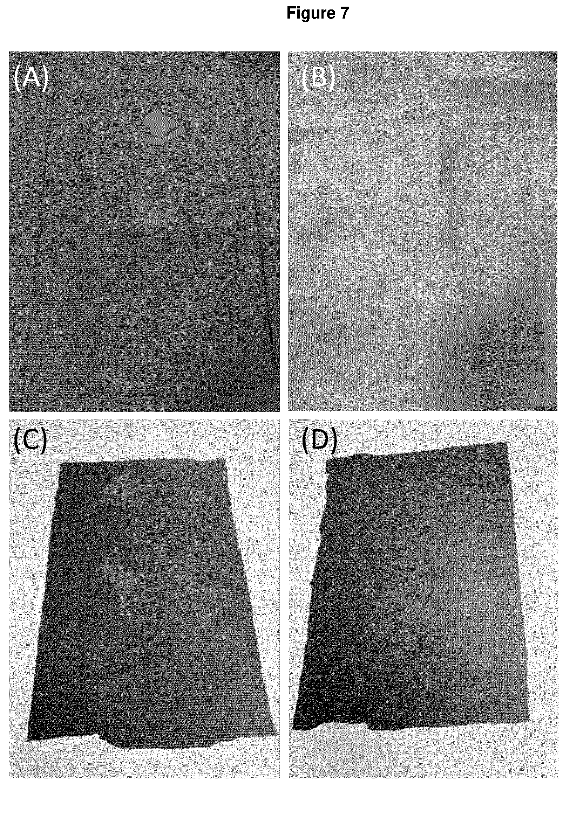

**Fig. 7** shows woven meshes from strings used in a method according to the invention (A) and a comparative method (B), which were engraved with a logo. In the resulting layered material according to the invention (C) this logo can be clearly seen, but not in the comparative example (D).

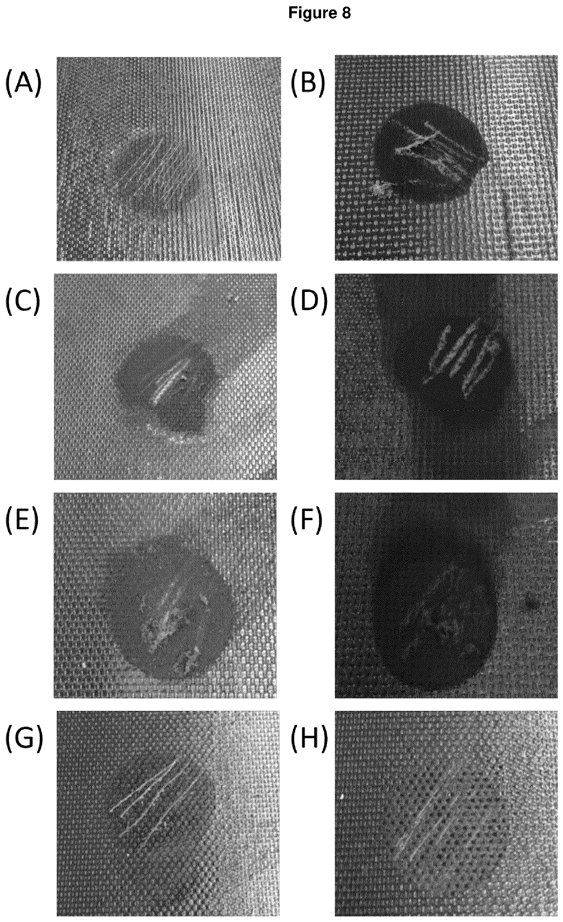

**Fig. 8** shows the results of cure tests of layered materials obtained by a method according to the invention (A, C, E, G, H) or from comparative examples using meshes made of PPS (B) or steel (D, F). The layered materials were treated with a 5 wt.-% aq. NaOH solution and the softening of film surface was evaluated by scraping with a knife. Film type H was used in Figs. 8A and 8B; film type G was used in Figs. 8C, 8D, and 8G; film type B was used in Figs. 8E, 8F, and 8H.

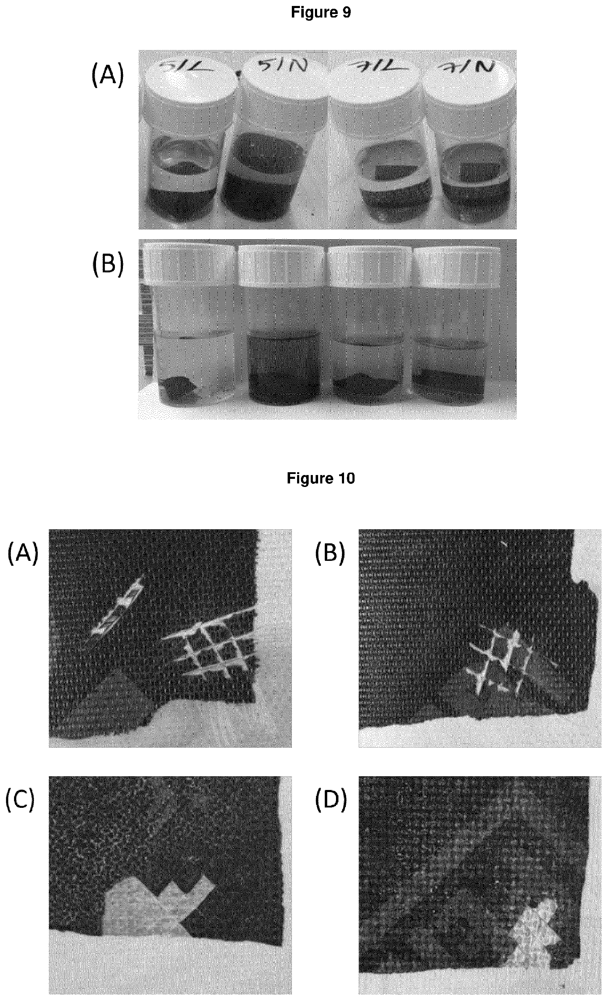

**Fig. 9** shows the results of cure tests of layered materials, wherein an aluminium-foil was placed between the board and the film (type H), which were stored in aq. NaOH (5 wt.-%) for 2h (A) and 8d (B). From left to right in both figures: according to the invention and comparative example at 5 min press time each, according to the invention and comparative example at 7 min press time each.
**Fig. 10** shows layered materials wherein a hydrophobic composition (total amount of 80-100 g/m²) was applied to the substrate before step a). Film type J was used in Figs. 10A and 10C; film type D was used in Figs. 10B and 10D.

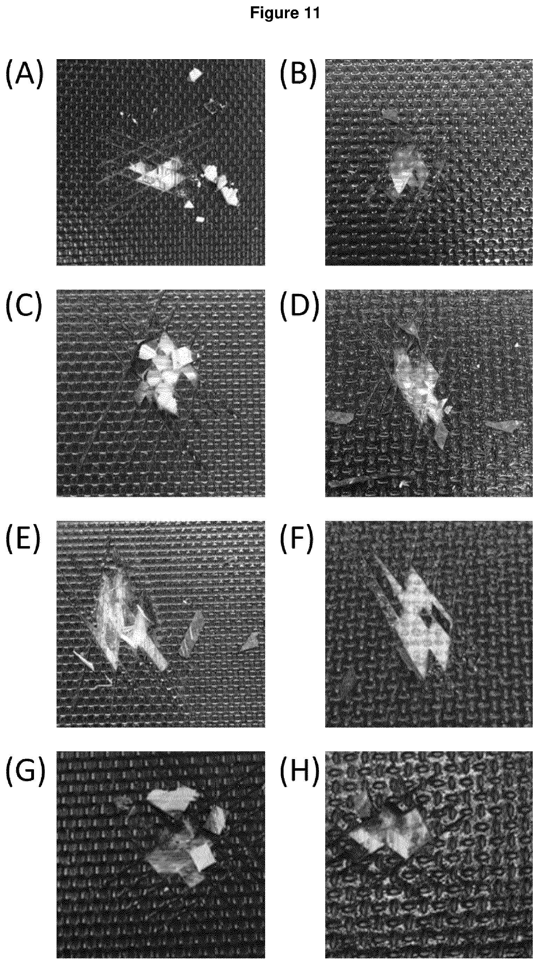

**Fig. 11** shows layered materials with a film between the substrate and a layer of plastic polymer material. In Figs. 11C-11F, the layer of plastic polymer material is between two films. In Figs. 11E, and 11F a hydrophobic composition was applied to the board prior to step a). Figs. 11G and 11H show layered material identical to Figs. 11E and 11F, respectively, after treatment in boiling water for 4h. The comparative examples are shown in Figs. 11B, 11D, 11F, and 11H; layered materials obtained from a method according to the invention in Figs. 11A, 11C, 11E, 11G. Film type A was used in all experiments.
**Fig. 12** shows examples of cross-sections of strings used in preferred embodiments of the invention. In Fig. 12A the surface of the string is planar for a portion 21 of the non-circular section's 10 width 20. Figs. 12B and 12C show rectangular cross-sections. In Fig. 12B the surface of the string is planar for a portion 21 of width 20 and a portion 31 of the height 30 of the non-circular section 10. In Fig. 12C the surface of the non-circular section 10 is planar for the entire width 20 and height 30.

### DETAILED DESCRIPTION OF THE INVENTION

The present invention provides a method for producing layered materials with a surface structure. Inter alia due to its improved friction and improved wear resistance, the layered material is particularly suitable for flooring under harsh conditions, such as in particular for the flooring of vehicles.

The method of the invention is a method of manufacturing a layered material with a surface structure comprising the following steps:
a) applying resin to a substrate, preferably to a board,
b) contacting the formation of a) with at least one string, preferably two or more strings,
   with at least one section (10) with a non-circular cross-section, wherein the ratio between the width (20) and height (30) of the at least one non-circular section (10) is in the range of 1.5:1 and 20:1,
c) applying heat and pressure to the formation formed in b),
d) removing the string/s from the formation formed in c).

It was found by the inventors that the use of at least one string that is not round, i.e. a string that has at least one section with a non-circular cross-section is advantageous, since this shape of the cross-section leads to shorter processing time in hot pressing. Without being bound by theory, it is assumed that this geometry improves the contact between the string and the resin, and thereby also between the resin and the press plates. This results in an improved heat conductivity, that becomes evident in shorter pressing times.

The skilled person is aware that the term "string" describes an object that extends primarily in one direction (length), but further has a width and a height, which are all perpendicular to each other. Further, the term "string" encompasses yarn, wire, filament, or thread.

Preferably, the section of non-circular section 10 comprises at least one planar surface. More preferably the section of non-circular section 10 comprises at least two planar surfaces, most preferably the section of non-circular section 10 comprises four planar surfaces. In a more preferred embodiment, the string comprises at least one, more preferably at least two, most preferably at four, planar surfaces.

In a preferred embodiment the surface/s of the non-circular section 10 is/are planar for at least 10%, preferably at least 50%, more preferably at least 70%, most preferably at least 90%, of the width 20 of said non-circular section 10. In a more preferred embodiment, the surface of the string is planar for at least 10%, preferably at least 50%, more preferably at least 70%, most preferably at least 90%, of the width of the string.

In a further preferred embodiment, the surface of the non-circular section 10 is planar for at least 10%, preferably at least 50%, more preferably at least 70%, most preferably at least 90%, of the height 30 of said non-circular section 10. In a more preferred embodiment, the surface of the string is planar for at least 10%, preferably at least 50%, more preferably at least 70%, most preferably at least 90%, of the height of the string.

The shape of this non-circular cross-section is preferably an ellipsoid or a parallelogram, even more preferred the cross-section is rectangular. Most preferred is the use of at least one string that throughout is evenly rectangular in its cross-section.

The non-circular section 10 most preferably has a rectangular cross-section. This rectangular non-circular section 10 is not limited to have sharp corners, rather it has two sets of parallel sides that are orthogonal to each other. Preferably the surface of the non-circular section 10 is planar for at least 10%, preferably at least 50%, more preferably at least 70%, most preferably at least 90%, of the width 20 and the height 30 of said non-circular section 10. Preferably the surface of the non-circular section 10 is planar for at least 10%, preferably at least 50%, more preferably at least 70%, most preferably at least 90%, of the width and the height of the string.

It is further preferred for the string to comprise at least one non-circular section 10 for at least 50%, preferably at least 70%, more preferably at least 90%, most preferably 100%, of its length. This holds particularly true for the above embodiments, whereby the string becomes essentially flat. Preferably, the string has a non-circular cross-section, more preferably a rectangular cross-section.

Furthermore, the layered material obtainable or obtained by the method according to the invention preferably has an improved surface in terms of structure and aesthetic appearance. In yet another embodiment, the layered material exhibits an improved durability and/or wear resistance.

Layered materials obtained or obtainable from a method according to the invention are also disclosed.

The high quality of the surface structure renders the layered materials according to the invention suitable for engraving. The board thus can be engraved in order to carry logos, codes or other means for the identification of the product and/or their origin. A preferred method of engraving is laser-engraving.

Generally, water can be formed and boil during the curing process, leading to the formation of resin bubbles, which then burst and create dust particles. This dust can then stain the production equipment and additionally negatively affects the aesthetics of the layered material. As a result, both the newly formed layered material and the production equipment have to be cleaned. It was found by the inventors, that the method according to the invention creates less dust particles during the curing process of the resin.

The width 20 of the non-circular section 10 used in the present invention is preferably in the range of 0.1 to 20 mm, more preferably 0.5 to 10 mm, even more preferably 1 to 5 mm, most preferred is a width 20 between 1.0 and 2.0 mm. In a more preferred embodiment the width of the string is in the range of 0.1 to 20 mm, more preferably 0.5 to 10 mm, even more preferably 1 to 5 mm, most preferably 1.0 to 2.0 mm. This applies in particular when the string has a rectangular cross-section, even more so when they are arranged in a mesh with a weave pattern, in particular a woven mesh.

The height 30 of the non-circular section 10 preferably is 0.1 to 10 mm, more preferably 0.15 to 5 mm, even more preferably 0.2 to 4 mm, most preferably 0.25 to 0.40 mm. In a more preferred embodiment the width of the string is in the range of 0.1 to 10 mm, more preferably 0.15 to 5 mm, even more preferably 0.2 to 4 mm, most preferably 0.25 to 0.40 mm .This applies in particular, when the strings have a rectangular cross-section and when they have the arrangement of a woven mesh.

It was found that there is a preferred range for the ratio of the width 20 to the height 30 of the the non-circular section 10, i.e. the non-circular section 10 is at least as wide as it is high. The ratio between the width 20 and height 30 is in the range of 1.5:1 and 20:1, preferably 1.5:1 and 10:1, more preferably of 2:1 and 6:1, most preferably 2.5:1 and 4:1. The ratio between the width and height of the string is in the range of 1.5:1 and 20:1, preferably 1.5:1 and 10:1, more preferably of 2:1 and 6:1, most preferably 2.5:1 and 4:1. This applies in particular, when the strings form a mesh, especially a mesh with a weave pattern, in particular a woven mesh.

The surface structure of the layered material obtainable by a method according to the invention can be influenced also by the ratio of the width 20 and the distance between neighboring strings.

In a preferred embodiment the ratio between the width 20 and the distance between neighboring strings in at least one direction is at least 1:10, preferably least 1:1, more preferably least 10:1, most preferably at least 100:1. This applies in particular, when the strings form a mesh, especially a woven mesh. Preferably, this is the case for strings in warp and/or weft, preferably warp. With respect to a mesh, particularly a woven mesh, it is preferred that the mesh is tightly knit. Preferably strings in warp are in contact with their at least one neighboring string, preferably both neighboring strings.

The strings used in the method according to the invention can be composed of one or more material. Preferably, the string comprises at least one part comprising a metal, a polymer, or both. More preferably, the at least one part of the string comprises a polymer, even more preferably consists of a polymeric composition. Most preferred is that the string consists of a polymeric composition.

The polymer in the polymeric composition is preferably selected from the group consisting of polyphenylenesulfide (PPS), polysulfone (PSU), polyethersulfone (PES), polyester, polyaryletherketone (PAEK), polybenzimidazole (PBI), aromatic polyamides, most preferably polyethersulfone (PES). The polyester is preferably obtainable from an aromatic dicarboxylic acid, in particular terephthalic acid, and an aliphatic diol. The polyesters is preferably selected from polyethyleneterephthalate (PET) and polybutylenetherephthalate (PBT), more preferably is PET. A preferred polyaryletherketone is polyether ether ketone (PEEK).

In a particular preferred embodiment of the invention the at least one string is arranged in a network, most preferred as a mesh. Preferably the mesh has a weave pattern.

Meshes can be produced by different methods depending on the material they are composed of. Preferred meshes are woven, extruded, injection-molded, braided, or knitted. Most preferably the mesh is woven.

The mesh typically is essentially composed of warp and weft. In a preferred embodiment warp and weft are perpendicular in the weave pattern. This leads to surface structures wherein the friction constants across and along the layered material are essentially even. In a preferred embodiment weave pattern is a plain weave, satin weave, twill weave, or basket weave. More preferably the strings form a woven mesh in a plain weave.

Meshes can comprise strings with sections with both circular and non-circular cross-sections. Preferably strings used for warp have a non-circular cross-section, more preferably strings with a non-circular cross-section are used for warp and weft.

Warp and weft can each comprise one or more strings. In a preferred embodiment warp comprises at least one string, preferably only one string. In a further preferred embodiment weft comprises at least one string, preferably only one string. In a more preferred embodiment warp and weft comprise at least one string each, most preferably only one string each.

Meshes typically have a mesh count, i.e. a certain number of strings in each warp and weft per distance unit. These are respectively referred to as warp mesh count and weft mesh count.

In a preferred embodiment, the mesh has a warp mesh count of 0.5 to 10 strings per cm, preferably 1 to 9 strings per cm, most preferably 4 to 7 strings per cm. In a further preferred embodiment mesh has a weft mesh count of 0.2 to 8 strings per cm, preferably 0.5 to 6 strings per cm, most preferably 2 to 4 strings per cm. In a more preferred embodiment, the mesh has a warp mesh count of 0.5 to 10 strings per cm, preferably 1 to 9 strings per cm, most preferably 4 to 7 strings per cm, and a weft mesh count of 0.2 to 8 strings per cm, preferably 0.5 to 6 strings per cm, most preferably 2 to 4 strings per cm.

As mentioned above, strings can differ in dimensions, shape and material. Preferably the non-circular section 10 of strings respectively used for warp and weft have the same width 20 and/or height 30. In a more preferred embodiment strings respectively used for warp and weft have the same width and height.

The at least one string in the most preferred embodiment of the invention is applied as a woven mesh, wherein
- the string comprises a polymeric composition,
- the width 20 is in the range of 0.05 to 20 mm and the height 30 in the range of 0.01 to 10 mm,
- the ratio between the width 20 and the height 30 is between 1.5:1 and 20:1,
- at least 10% of the width 20 and at least 10% of the height 30 of the non-circular section 10 are planar, and
- the ratio between the width 20 of the non-circular section 10 and the distance between neighboring strings in at least one direction, preferably warp, of the woven mesh is at least 1:10, preferably greater.

The at least one string can be contacted to the formation formed in step a) in multiple ways. In a most preferred embodiment, the at least one string is directly applied to the formation formed in step a). Preferably at least one planar surface is contacted to the formation formed in step a). In the context of hot-pressing, pressure is then applied to the formation formed in step b) by contacting it with a press plate.

In a further aspect, however not encompassed by the wording of the claims, the disclosure therefore relates to the layered formation formed in step b).

In an alternative embodiment the at least one string is attached to a press plate. Here, contacting happens by moving the formation formed in step a) and/or the press plate, which the at least one string is attached to.

The resin is preferably applied as an overlay. The term "overlaying" according to the invention refers to substantially covering at least one side of the board with a resin. Preferably the at least one side is covered by at least 90%, more preferably by at least 95%, most preferably by 100% of its surface area.

The resin is preferably applied to a side of the carrier perpendicular to the carrier's shortest axis, i.e. top-side or bottom-side. Preferably the resin is applied to the top-side of the carrier.

"Hot-pressing", i.e. the application of heat and pressure, is generally known to the skilled person in the art. Typically, the temperature is chosen such that it is sufficient to cure the resin. Preferred temperatures are in the range of 100 to 250 °C, more preferably in the range of 120 to 180 °C, most preferably in the range of 130 to 150 °C. Preferred pressures are 0.5 to 4 N/mm², more preferably 1.0 to 3.0 N/mm², most preferably 1.5 to 2.5 N/mm².

The resin is preferably a thermosetting resin, i.e. a resin which irreversibly hardens ("cures") upon treatment with heat. In a preferred embodiment the resin is a phenolic resin, an amino resin or an amino-phenolic resin. Such resins are available from the reaction of a cross-linker with at least one monomer. A typical and preferred cross-linker is formaldehyde. Monomers for phenolic resins belong to the class of phenols, preferably is phenol. The monomer belonging to the class of phenols can also be at least partially replaced by lignin, preferably kraft lignin, or a derivative thereof. Monomers for amino resins are typically and preferably urea and/or melamine. Amino-phenolic resins are available by either combining the monomers of both phenolic and amino resins with a cross-linker or combining a preformed phenolic resin with an amino resin. Preferably the resin is a phenolic resin, more preferably a resole resin.

In a preferred embodiment the resin is applied in the form of a resin-impregnated carrier (film). While using one resin-impregnated carrier already led to improved friction of layered materials obtainable from a method according to the invention, this effect was increasingly observed when multiple layers of resin-impregnated carriers were applied. In a more preferred embodiment, the resin is applied as at least two resin-impregnated carriers.

The carrier material is preferably selected from the group consisting of paper, card board, glass fiber, textiles, plastics, mineral material, metal. More preferably the carrier material is paper. Preferred papers are kraft paper or sack paper, in particular kraft paper. Textiles include woven and non-woven fabrics. Preferable plastics are rigid foams and foam plastic. Preferred mineral materials are ceramics and cellular concrete. A preferred metal carrier is a metal foil.

In a further preferred embodiment, the carrier comprises at least one friction-enhancing additive, such as and preferably corundum. This applies in particular to paper.

In a preferred embodiment the carrier has a grammage in the range of 25 to 400 g/m², preferably 40 to 200 g/m², more preferably 60 to 150 g/m². This holds particularly true for paper, especially kraft paper. Preferably, the resin-impregnated paper has grammage in the range of 50 to 550 g/m², preferably 80 to 300 g/m², most preferably 110 to 230 g/m².

In a preferred embodiment of the invention at least two (multiple) resins are applied, in particular, multiple layers of resin, wherein the same resin can be used multiple times or different resins can be used. Preferably at least one of the multiple resins is applied as a resin-impregnated carrier. The multiple resins can be applied as multiple films and/or a carrier material impregnated with multiple resins. When a carrier is impregnated multiple times, it is preferred, that the solvent, is removed from the film after a first impregnation and prior to a second impregnation. This is generally referred to as "wet-on-dry method". Preferably the solvent content of the film was reduced to at least 15 wt.-%, more preferably at least 10 wt.-%, most preferably at least 5 wt.-%, before the film was impregnated with a further resin. This applies in particular when the solvent is water. Removal of solvent from the film can be accomplished e.g. by drying in air and/or infrared radiation. It was found that a film obtained from a wet-on-dry method can stop bleeding of a hydrophobic layer.

The substrate used for forming the layered material according to the invention can be made of any material suitable for hot-pressing. As mentioned above, the substrate, preferably a board, according to the invention has a top-side, a bottom-side and lateral side/s. In a preferred embodiment of the invention, the substrate is a wood article. In a particularly preferred embodiment, the substrate is a wood article selected from the group consisting of wood, plywood, chipboard, block board, fiber board, oriented strand board (OSB), glue wood, laminated veneer lumber (LVL), parallel strand lumber (PSL), oriented strand lumber (OSL), 3-layer boards, more preferably plywood or block board, most preferably plywood.

In a further embodiment of the invention the substrate comprises at least one layer of a hydrophobic composition on its surface, preferably the surface upon which the resin is applied, more preferably top-side. It was surprisingly found that with a method according to the invention good bonding could be established between the resin and the board, which is not possible with meshes used in the state of the art. It was further found that addition of a hydrophobic agent not only further increases the moisture resistance but also surprisingly increases the layered materials rolling resistance. In a preferred embodiment the hydrophobic composition comprises a hydrophobic agent, preferably in an amount of 60 to 100 wt.-%, more preferably 80 to 100 wt.-%.

Preferably the hydrophobic agent is selected from the group of waxes, oils, fats, fatty acids, alkanes, alkenes, their derivatives, and mixtures thereof. More preferably the hydrophobic agent is selected from the group consisting of paraffin wax, silicone oil, and alkene ketene dimer, and mixtures thereof. Most preferably the hydrophobic agent is an alkene ketene dimer. Preferably the layer consisting of a hydrophobic composition has an area density of 20 to 150 g/m², preferably 30 to 100 g/m², more preferably 40 to 50 g/m². Most preferably the substrate comprises two layers of a hydrophobic composition with an area density of 40 to 50 g/m² each.

The resin-impregnated carrier used with a substrate comprising at least one layer of a hydrophobic composition is preferably obtained or obtainable from the wet-on-dry method.

The formation formed in step a) can further comprise at least one layer comprising a plastic polymer material. It was found that the use of a plastic polymer material can increase the wear resistance of layered materials. It was further found, that this layer shows particularly good bonding with the resin, in particular phenolic resins, when the plastic polymer material has a water absorption of at least 5 wt.-% as measurable according to ASTM D570 as an equilibrium value using water having a temperature of 23 °C, and a melting point of at least 200 °C. Particularly good bonding is established when the plastic polymer material comprises a polyamide (PA), preferably a polyamide with six to nine carbon atoms per nitrogen atom. More preferably this polyamide is selected from the group consisting of PA 6, PA 66, and PA 69. Polyamides made from only one monomer, such as PA 6, are generally available ring-opening polymerization of lactams, ε-caprolactam in the case of PA 6. Polyamides with alternating monomers are available from the polycondensation of diamines with dicarboxylic acids, in particular where both are aliphatic. Examples for this are hexamethylenediamine with either adipic acid (PA 66) or azelaic acid (PA 69). The most preferred polyamide is PA 6.

In a further preferred embodiment, the at least one layer comprising a plastic polymer material is comprised in the formation formed in step a) and is in contact with two layers of resin. This leads to a reinforced surface of the layered material.

It is further preferred for the substrate to comprise at least one layer comprising a hydrophobic agent and the formation formed in step a) to further comprise at least one such layer comprising a plastic polymer material.

A further aspect of the invention relates to the provision of a layered material with a surface structure comprising an image. It was found that the strings could be formed in a mesh, preferably a woven mesh, and the inverse of an image could be removed from the mesh, e.g. by abrasive methods, prior to step a) of the method according to the invention. The invention therefore also relates to a layered materials with a surface structure comprising an image and their method of manufacture.

Abrasive methods used are preferably selected from the group consisting of abrasive blasting, scraping, and sanding. Preferred abrasive blasting methods are shot blasting, bead blasting, sand blasting, and soda blasting, more preferably soda blasting.

While not encompassed by the wording of the claims, the disclosure further relates to the use of string/s as described above, preferably as a mesh, for a method of embossing a surface structure into a formation comprising at least one resin and a substrate. Embossing necessitates the application of pressure, but preferably also comprises the application of heat.

The inventors found that a profile, e.g. of a structured press plate, that has a surface structure as conveyed by the string/s as described above and a weave pattern can be used in method of manufacturing layered materials. Therefore, the invention relates in yet a further aspect to a method of manufacturing a layered material with a surface structure comprising the following steps:
I. applying at least one resin to a substrate,
II. contacting to the formation formed in I. a profile,
III. applying heat and pressure to the formation formed in II.,
IV. removing the profile,
wherein the profile has a weave pattern and the surface of the profile contacted to the formation of I. is shaped according to surface of the at least one string as defined above. While not encompassed by the wording of the claims, the disclosure further relates to layered materials obtained or obtainable by this process.

### EXAMPLES

### Preparation of test samples

Examples according to the invention and comparative examples were prepared according to the following procedure unless specified otherwise:
A plywood birch board with a thickness of 9 mm was overlaid with a resin-impregnated paper (film), a mesh, and placed in a hot press. Hot-pressing was conducted over 7 minutes at a temperature of 135 °C and a pressure of 1.8 N/mm². After the hot-pressing was completed, the mesh was removed from the layered material with a surface structure.

For examples according to the invention, polyester (hydrolysis resistant grade) strings with a height 30 of 0.35 mm and a width 20 of 1.06 mm and planar surfaces for at least 90% of both width 20 and height 30 extending for the entire length of the string, were woven into a plain weave mesh with a total thickness of 0.7 mm. A photographic image of such a mesh is shown in Figure 1A and a close-up in Figure 1B.

A photographic image of a layered material obtained from a method according to the invention is shown in Figure 2A and a close-up thereof in Figure 2B.

For comparative examples polyphenylene sulfide (PPS) strings with a circular cross-section and a diameter of 0.8 mm woven into a plain weave mesh with a total thickness of 1.6 mm were used. This is a mesh used traditionally in plywood industry. A photographic image of this mesh is shown Figure 1C and a close-up in Figure 1D.

A photographic image of a layered material obtained from a comparative example is shown in Figure 2C and a close-up thereof in Figure 2D.

Characteristics of the resin-impregnated papers used in the examples is provided in Table 1.

All resins used therein are phenolic resins. Film type J is available by double impregnation of the paper using the "wet-on-dry method" and effectively blocks wax bleed during hot-pressing.

**Table 1: Resin-impregnated carriers (films)**

| **Film type** | **Resin formulation** | **Grammage [g/m²]** | |
|---|---|---|---|
| | | **Paper** | **Total** |
| A | 1 | 40 | 120 |
| B | 2 | 80 | 210 |
| C | 3 | 80 | 220 |
| D | 4 | 80 | 220 |
| E | 1 | 80 | 220 |
| F | 2 | 40 | 120 |
| G | 1 | 80 | 220 |
| H | 1 | 40 | 120 |
| J | 5 | 80 | 220 |

### Dust formation

To compare the dust formation depending on the surface structure of layered materials, layered materials were prepared according to the invention and according to the comparative procedure above.

Subsequently adhesive tape was applied to the layered materials with the adhesive side face-to-face with the surface structure of the layered materials. The layered materials were then turned upside-down and removed from the adhesive tape. Photographic images of the adhesive tapes are shown in Figure 3. As can be seen therein, the surface structure of the layered material according to the disclosure, however not encompassed by the wording of the claims (Fig. 3A), retains virtually no dust, whereas a significant amount of dust was retained in the grooves of the comparative layered material.

### Masking of panel flaws

Masking of panel flaws was compared by milling veneers from the bottom-side of plywood samples either leaving only two or three plies intact in certain places. Subsequently layered materials were produced from the flawed panels as described above using different resin-impregnated papers. Photographic images of these panels are shown in Figure 4 (A-C are according to the invention; D-F are comparative examples). The same resin-impregnated papers were respectively used for the layered materials in Figures 4A and 4D, 4B and 4E, and 4C and 4F. Places in which the bottom side was milled down to two or three plies are highlighted with dotted and dashed boxes, respectively.

Figure 4 shows, that layered materials according to the disclosure, however not encompassed by the wording of the claims, are superior in masking panel flaws. This is particularly apparent by comparing Figures 4C and 4F.

### Comparison of thermal conductivities

Two sets of tests were carried out to investigate the influence of type of strings on the thermal conductivity and consequently the time required to cure the resin. Notably, the thermal conductivities materials used in the method according to the invention and the comparative examples are similar.

In the first set of tests, respectively one and two resin-impregnated papers were hot-pressed using the comparative method and two resin-impregnated papers were hot-pressed in a method according to the invention. A thermocouple was placed between the plywood and the resin-impregnated paper at the center of the layered material. The temperature curves from these experiments are presented in Figure 5. Looking at the comparative examples, the addition of a further resin-impregnated paper leads to a stifled increase of temperature and therefore longer curing times. In the method according to the invention however, the temperature rises dramatically faster and therefore curing times are reduced. This is even the case, when the method according to the invention with two resin-impregnated papers is compared to the comparative example with only one resin-impregnated paper.

In the second set of tests, the layered materials were produced using plywood with differing thicknesses, i.e., 9 mm, 18 mm, and 36 mm. A thermocouple was placed between the plywood and the resin-impregnated paper at the center of the layered material. The temperature curves from these experiments are presented in Figure 6. As expected, using thicker boards leads to a slower increase in temperature as more mass needs to be heated. Heat conductivity in the method according to the invention was significantly faster than in the comparative examples at the same board thickness. Moreover, the temperature in the thinnest formation (i.e. 9 mm) from the comparative examples only overtook the temperature in methods according the invention using formations having twice and four times the thickness (i.e. 18 and 36 mm), when the temperature in the latter already started plateauing.

Consequently, the method according to the invention enables much shorter hot-pressing times.

### Curing tests

Differences between curing behaviors of the method according to the invention and state of the art methods (wherein meshes were composed of either PPS or steel wire) were investigated. The curing levels were judged both by discoloration and the hardness of the surface structure of the material. Discoloration and increasing softness of the film are both indicators of insufficient curing.

For discoloration, aqueous NaOH (5 wt.-%) was applied to the structured surface of the layered material for 1h and the color of the solution was observed. Subsequently, a portion of the film was partially scraped off. If the film is fully cured, the solution should be colorless. Severely insufficiently cured resins on the other hand color the solution brown.

The cure level was further assessed by the softness of the film after the layered material had been exposed to aqueous NaOH (5 wt.-%) for 2h. The cure level was assessed by the perceived hardness of the film. The analysis differentiated between the following levels of curing:
- 0 = curing complete; hard film
- -1 = curing almost complete; slightly soft film
- -2 = curing incomplete; soft film
- -3 = curing very incomplete; very soft film

Some of the samples are also shown in Figure 8. Results of the curing tests are presented in Table 2. For results marked with an asterisk (*), aluminium-foil was placed between the mesh and the film to avoid perforation of the film by the mesh.

**Table 2: Discoloration and cure levels of different film types at varying press times**

| **Film type** | **Press time [min]** | **Discoloration** | | | **Cure level** | | |
|---|---|---|---|---|---|---|---|
| | | inventive | comp. (steel) | comp. (PPS) | inventive | comp. (steel) | comp. (PPS) |
| B | 5 | N | Y | Y | -2 | -3 | -3 |
| | 7 | N | N / N* | N / N* | 0 | -1 / 0* | -1 / 0* |
| G | 5 | N | N | N | -1 | -2 | -2 |
| | 7 | N | N / N* | N / N* | 0 | -1 / 0* | - / 0* |
| H | 5 | N | - | Y | 0 | - | -3 |

It was found, that the resin was cured better in the method according to the invention than in the comparative examples. Even after 7 min of curing film types B or G, the comparative examples were only fully cured, when an aluminium-foil was additionally added. Meanwhile full curing was accomplished with the method according to the invention without this additional measure. Notably, the thinner film type H could be cured within 5 min with the method according to the invention, whereas the comparative method resulted in a very incomplete curing.

An additional set of tests was carried out, wherein an aluminium-foil was applied between the board and the film (type H) prior to hot-pressing (5 and 7 min), resulting in thin materials with a layered structure. This way, the cure level can be studied without interference between the wooden board and the film. The layered materials were then placed in an aq. solution of NaOH (5 wt.-%) for 2h and 8d. The results of these tests are shown in Figure 9. For the layered material obtained in a method according to the invention, no difference is seen between 5 min and 7 min press time, after either 2h or 8d of storage. The comparative example (PPS wire mesh) with 7min press time shows a slightly stronger discoloration than that obtained in a method according to the invention. At 5 minutes press however, the difference is much clearer at both storage times, where the solution of the comparative example is brown.

These results further confirm that the method according to the invention leads to faster curing times of the resin when compared to state-of-the-art methods.

### Measurement of friction coefficients

Friction coefficients were measured by pulling a sledge across the top of the test samples. The force required to move the sled was measured using a scale attached to the sled.

Layered materials according to the disclosure, however not encompassed by the wording of the claims, obtained using a mesh mentioned as above are not symmetric along warp and weft, hence two friction coefficients were determined and averaged for said samples. Each measurement was carried out six times and the average friction coefficient was determined. Layered materials obtained for comparative examples are symmetric along weave and weft, thus only one friction constant was determined for these samples.

The static friction coefficients of layered materials were determined using different resin-impregnated papers as well as varying amounts of resin-impregnated papers (layers). The results of these measurements are summarized in Table 3:

**Table 3: Static friction coefficients**

| **Sample** | | **Static friction coefficient** | | |
|---|---|---|---|---|
| Film type | layers | acc. to invention | comparative | Difference [%] |
| A | 1 | 0.44 | 0.30 | +47 |
| B | 2 | 0.41 | 0.36 | +14 |
| | 3 | 0.50 | 0.41 | +22 |
| C | 1 | 0.39 | 0.27 | +44 |
| D | 1 | 0.49 | 0.29 | +69 |
| E | 1 | 0.39 | 0.28 | +39 |
| | 3 | 0.35 | 0.20 | +75 |

It was found that layered materials obtained from the method according to the invention exhibit a significantly higher friction coefficient. This change is particularly pronounced when multiple layers of resin-impregnated papers are used.

### Moisture resistance (Cobb test)

For this test commercially available phenolic resin-impregnated films were used for producing layered materials as laid out above. The water permeability of article surfaces was determined by the absorbed water quantity through the surface (i.e. Cobb values) of the test samples.

The film was pressed on both sides of a plywood and cut to a 12,5 x 12,5 cm square. After storage of the samples for three weeks in an air-conditioned room the Cobb-values were determined as follows:
The initial weight of the samples was measured, documented, and the sample was subsequently strained in the Cobb apparatus. The cylinders of the apparatus were filled with deionized water. After 7 days the samples were dried, weighted and the final weight was documented. From the difference between the initial weight and the final weight the Cobb-value was calculated.

Measurements were carried out in duplicates and the Cobb-values averaged. The results of the Cobb-test are shown in Table 4.

**Table 4: Result of the Cobb-test**

| **Film type** | **Average Cobb value [g/m²]** | | **Difference [%]** |
|---|---|---|---|
| | acc. to invention | comparative | |
| A | 1854 | 2632 | +42 |
| B | 1139 | 3017 | +165 |
| C | 389 | 2549 | +555 |
| D | 143 | 2578 | +1703 |
| E | 320 | 1686 | +427 |
| F | 2943 | 3263 | +11 |

Layered materials according to the disclosure, however not encompassed by the wording of the claims, exhibit a significantly lower water uptake when compared to those produced using strings with a round diameter. The moisture penetration through films in layered materials produced with a method according to the invention is therefore greatly improved.

### Taber abrasion test

Wear resistance can be determined by the Taber Abrasion Method using a test sample which rotates under loaded cylindrical and emery strip covered friction wheels. The abrasion resistance is determined by the number of rotations (r) needed until a predetermined level of abrasion (initial wear point) was observed.

The Taber test is based on DIN EN 13329 resp. DIN EN 438-2 11, which include the latest improvements regarding the abrasion test. Therefore, a calibrated sandpaper S 42 was used. The test samples are cut out of the wood products comprising the film according to the invention and have a size of 10 x 10 cm and a centered hole with a size of 6 mm.

The results of this test are presented in Table 5:

**Table 5: Result of the Taber test**

| Parameter | | **Film type** | | | |
|---|---|---|---|---|---|
| | | A | B | E | F |
| **Initial Wear Point [r]** | Inv. | 258 | 720 | 696 | 211 |
| | Comp. | 204 | 605 | 595 | 162 |
| | Diff. [%] | +27 | +19 | +17 | +30 |
| **Wear Resistance [r]** | Inv. | 360 | 894.5 | 826.5 | 314.5 |
| | Comp. | 308 | 737 | 682.5 | 235 |
| | Diff. [%] | +17 | +21 | +21 | +34 |
| **Wear Index [mg/100r]** | Inv. | 103.9 | 69.2 | 73.1 | 98.1 |
| | Comp. | 123.8 | 87:5 | 103.9 | 152.6 |
| | Diff. [%] | -16 | -21 | -30 | -36 |

The results of the Taber test show that layered materials obtained from a method according to the invention exhibit not only a higher initial wear point and wear resistance, but also a reduced wear index in comparison to those obtained from a state-of-the-art method.

Consequently, layered materials obtained from the same starting materials possess an increased durability and thus life cycle when produced using a method according to the invention.

### Inclusion of a hydrophobic agent

For these experiments a total amount of 80 to 100 g/m² of an alkene ketene dimer was applied to the board, before the film was applied. Two sets of tests were carried out: one with film type D, and one with film type J. The latter is a special film, which effectively prevents the bleeding of wax through the film. After hot-pressing and the removal of the meshes, the layered materials were analyzed optically and the surface structure scratched to investigate, if the film had bonded to the board. The results are shown in Figure 10. The layered structures according to the invention showed good bonding, with only wood failure. Moreover, the sample with film type J showed virtually no wax bleed. The comparative examples on the other hand both showed no bonding of the films to the board but exhibited significant wax bleed instead; even when film type J was used.

### Addition of a layer composed of a plastic polymer material

For these experiments film type A, a 55 µm thick layer composed of a polyamide material, and a press time of 6 min was used. Three sets (one experiment according to the invention and one comparative example each) of layered materials were manufactured, differing only in step a): In the first set, the substrate was overlaid with a film and a layer composed of a polyamide material. In the second set, the substrate was overlaid with a first film and a layer composed of a polyamide material, which was then overlaid with a second film. In the third set, 40 g/m² of an alkene ketene dimer was applied to the substrate, after which the procedure of the second set was carried out.

In a further test, samples (50 mm x 50 mm) of the layered materials were subjected to treatment in boiling water for 4h.

The resulting layered materials were cut with a knife to investigate bonding between resin and substrate. Photographic images are shown in Fig. 11. In the comparative examples layers are easily removed from the substrate as exhibited by adhesive failure. Layered materials according to the disclosure, however not encompassed by the wording of the claims, exhibit strong bonding between resin and substrate, as indicated by the cohesive failure of the wooden substrate. This stark contrast was particularly evident after the samples had been subjected to treatment in boiling water.

### Hot-pressing of logos

In yet another experiment, the printing of logos during hot-pressing was investigated. For this, a logo was etched by soda blasting into a woven mesh as used in the invention (Fig. 7A) and the comparative examples (Fig. 7B). The resulting layered materials are presented in Figures 7C (according to the invention) and 7D (comparative example). While the logo is clearly visible on the layered material according to the invention, it is barely visible on the layered material according to the comparative examples.

### REFERENCE NUMBERS

10: non-circular section
20: width of the non-circular section
21: portion of the non-circular section's width with a planar surface
30: height of the non-circular section
31: portion of the non-circular section's height with a planar surface

## Claims

1. Method of manufacturing a layered material with a surface structure comprising the following steps:
a) applying resin to a substrate, preferably to a board,
b) contacting the formation of a) with at least one string, preferably two or more strings, with at least one section (10) with a non-circular cross-section, wherein the ratio between the width (20) and height (30) of the at least one non-circular section (10) is in the range of 1.5:1 and 20:1,
c) applying heat and pressure to the formation formed in b),
d) removing the string/s from the formation formed in c).

2. Method according to claim 1, **characterized in that** the non-circular section (10) comprises at least one planar surface, preferably at least two planar surfaces, most preferably four planar surfaces.

3. Method according to claim 1 or 2, **characterized in that** the surface of the non-circular section (10) is planar for at least 10%, preferably at least 50%, more preferably at least 70%, most preferably at least 90%, of the width (20) of said non-circular section (10).

4. Method according any of the previous claims, **characterized in that** the surface of the non-circular section (10) is planar for at least 10%, preferably at least 50%, more preferably at least 70%, most preferably at least 90%, of the height (30) of said non-circular section (10).

5. Method according to claim 1, **characterized in that** the cross-section of the non-circular section (10) is an ellipsoid or parallelogram, preferably a parallelogram, more preferably is rectangular.

6. Method according to any of the previous claims, **characterized in that** the ratio between the width (20) and height (30) of the at least one non-circular section (10) is in the range of 1.5:1 and 10:1, preferably 2:1 and 6:1, most preferably 2.5:1 and 4:1.

7. Method according to any of the previous claims, **characterized in that** the width (20) of the non-circular section (10) is in the range of 0.1 to 20 mm, preferably 0.5 to 20 mm, more preferably 1 to 5 mm, most preferably 1.0 to 2.0 mm.

8. Method according to any of the previous claims, **characterized in that** the height (30) of the non-circular section (10) is in the range of 0.01 to 10 mm, preferably 0.15 to 5 mm, more preferably 0.2 to 4 mm, most preferably 0.25 to 4 mm.

9. Method according to any of the previous claims, **characterized in that** the string/s at least partially form/s a mesh, preferably a mesh with a weave pattern.

10. Method according to claim 9, **characterized in that** the ratio between the width (20) of the string and the distance between strings in warp and/or weft, preferably warp, is at least 1:10, preferably at least 1:1, more preferably at least 10:1, most preferably at least 100:1.

11. Method according to any of the previous claims, **characterized in that** the at least one resin is applied to the substrate in form of a resin-impregnated carrier.

12. Method according to any of the previous claims, **characterized in that** the substrate comprises at least one layer consisting of a hydrophobic composition, preferably on a surface of the substrate, more preferably the top-side of the substrate.

13. Method of manufacturing a layered material with a surface structure comprising the following steps:
I. applying at least one resin to a substrate,
II. contacting to the formation formed in I. a profile,
III. applying heat and pressure to the formation formed in II.,
IV. removing the profile,
**characterized in that** the profile has a weave pattern and the surface of the profile contacted to the formation of I. is shaped according to the surface of the at least one string as defined in any of the claims 1 to 10.

## Patentansprüche

1. Verfahren zum Herstellen eines Schichtmaterials mit einer Oberflächenstruktur, die folgenden Schritte umfassend:
a) Aufbringen von Harz auf ein Substrat, vorzugsweise auf eine Platte,
b) Inkontaktbringen der Formation von a) mit mindestens einem Strang, vorzugsweise zwei oder mehr Strängen, mit mindestens einem Abschnitt (10) mit einem nicht kreisförmigen Querschnitt, wobei das Verhältnis zwischen der Breite (20) und der Höhe (30) des mindestens einen nicht kreisförmigen Abschnitts (10) im Bereich von 1,5:1 und 20:1 liegt,
c) Aufbringen von Wärme und Druck auf die in b) ausgebildete Formation,
d) Entfernen des Strangs/der Stränge aus der in c) ausgebildeten Formation.

2. Verfahren nach Anspruch 1, **dadurch gekennzeichnet, dass** der nicht kreisförmige Abschnitt (10) mindestens eine ebene Oberfläche, bevorzugt mindestens zwei ebene Oberflächen, am meisten bevorzugt vier ebene Oberflächen umfasst.

3. Verfahren nach Anspruch 1 oder 2, **dadurch gekennzeichnet, dass** die Oberfläche des nicht kreisförmigen Abschnitts (10) für mindestens 10 %, bevorzugt mindestens 50 %, stärker bevorzugt mindestens 70 %, am meisten bevorzugt mindestens 90 %, der Breite (20) des nicht kreisförmigen Abschnitts (10) eben ist.

4. Verfahren nach einem der vorhergehenden Ansprüche, **dadurch gekennzeichnet, dass** die Oberfläche des nicht kreisförmigen Abschnitts (10) für mindestens 10 %, bevorzugt mindestens 50 %, stärker bevorzugt mindestens 70 %, am meisten bevorzugt mindestens 90 %, der Höhe (30) des nicht kreisförmigen Abschnitts (10) eben ist.

5. Verfahren nach Anspruch 1, **dadurch gekennzeichnet, dass** der Querschnitt des nicht kreisförmigen Abschnitts (10) ein Ellipsoid oder Parallelogramm, bevorzugt ein Parallelogramm, stärker bevorzugt rechteckig ist.

6. Verfahren nach einem der vorhergehenden Ansprüche, **dadurch gekennzeichnet, dass** das Verhältnis zwischen der Breite (20) und Höhe (30) des mindestens einen nicht kreisförmigen Abschnitts (10) im Bereich von 1,5:1 und 10:1, bevorzugt 2:1 und 6:1, am meisten bevorzugt 2,5:1 und 4:1, liegt.

7. Verfahren nach einem der vorhergehenden Ansprüche, **dadurch gekennzeichnet, dass** die Breite (20) des nicht kreisförmigen Abschnitts (10) im Bereich von 0,1 bis 20 mm, bevorzugt 0,5 bis 20 mm, stärker bevorzugt 1 bis 5 mm, am meisten bevorzugt 1,0 bis 2,0 mm, liegt.

8. Verfahren nach einem der vorhergehenden Ansprüche, **dadurch gekennzeichnet, dass** die Höhe (30) des nicht kreisförmigen Abschnitts (10) im Bereich von 0,01 bis 10 mm, bevorzugt 0,15 bis 5 mm, stärker bevorzugt 0,2 bis 4 mm, am meisten bevorzugt 0,25 bis 4 mm, liegt.

9. Verfahren nach einem der vorhergehenden Ansprüche, **dadurch gekennzeichnet, dass** der Strang/ die Stränge mindestens teilweise ein Netz bildet/bilden, vorzugsweise ein Netz mit einem Flechtmuster.

10. Verfahren nach Anspruch 9, **dadurch gekennzeichnet, dass** das Verhältnis zwischen der Breite (20) des Strangs und dem Abstand zwischen Strängen in Kette und/oder Schuss, bevorzugt Kette, mindestens 1:10, bevorzugt mindestens 1:1, stärker bevorzugt mindestens 10:1, am meisten bevorzugt mindestens 100: 1, beträgt.

11. Verfahren nach einem der vorhergehenden Ansprüche, **dadurch gekennzeichnet, dass** das mindestens eine Harz in Form eines harzimprägnierten Trägers auf das Substrat aufgebracht wird.

12. Verfahren nach einem der vorhergehenden Ansprüche, **dadurch gekennzeichnet, dass** das Substrat mindestens eine Schicht umfasst, die aus einer hydrophoben Zusammensetzung besteht, bevorzugt auf einer Oberfläche des Substrats, stärker bevorzugt auf der Oberseite des Substrats.

13. Verfahren zum Herstellen eines Schichtmaterials mit einer Oberflächenstruktur, die folgenden Schritte umfassend:
I. Aufbringen mindestens eines Harzes auf ein Substrat,
II. Inkontaktbringen eines Profils mit der in I. ausgebildeten Formation,
III. Aufbringen von Wärme und Druck auf die in II. ausgebildete Formation,
IV. Entfernen des Profils,
**dadurch gekennzeichnet, dass** das Profil ein Flechtmuster aufweist und die Oberfläche des Profils, die mit der Formation von I. in Kontakt steht, gemäß der Oberfläche des mindestens einen Strangs nach einem der Ansprüche 1 bis 10 geformt ist.

## Revendications

1. Procédé de fabrication d'un matériau stratifié avec une structure de surface comprenant les étapes suivantes :
a) l'application de résine sur un substrat, de préférence sur une planche,
b) la mise en contact de la formation de l'étape a) avec au moins un fil, de préférence deux fils ou plus, avec au moins une section (10) de section transversale non circulaire, dans lequel le rapport entre la largeur (20) et la hauteur (30) des une ou plusieurs sections (10) non circulaires est dans la plage de 1,5:1 à 20:1,
c) l'application de chaleur et de pression à la formation formée à l'étape b),
d) l'élimination du ou des fils de la formation formée à l'étape c).

2. Procédé selon la revendication 1, **caractérisé en ce que** la section (10) non circulaire comprend au moins une surface plane, de préférence au moins deux surfaces planes, idéalement quatre surfaces planes.

3. Procédé selon la revendication 1 ou 2, **caractérisé en ce que** la surface de la section (10) non circulaire est plane sur au moins 10 %, de préférence au moins 50 %, idéalement au moins 70 %, plus idéalement au moins 90 %, de la largeur (20) de ladite section (10) non circulaire.

4. Procédé selon l'une quelconque des revendications précédentes, **caractérisé en ce que** la surface de la section (10) non circulaire est plane sur au moins 10 %, de préférence au moins 50 %, idéalement au moins 70 %, plus idéalement au moins 90 %, de la hauteur (30) de ladite section (10) non circulaire.

5. Procédé selon la revendication 1, **caractérisé en ce que** la section transversale de la section (10) non circulaire est un ellipsoïde ou un parallélogramme, de préférence un parallélogramme, idéalement rectangulaire.

6. Procédé selon l'une quelconque des revendications précédentes, **caractérisé en ce que** le rapport entre la largeur (20) et la hauteur (30) de l'au moins une section (10) non circulaire est dans la plage de 1,5:1 à 10:1, de préférence de 2:1 à 6:1, idéalement de 2,5:1 à 4:1.

7. Procédé selon l'une quelconque des revendications précédentes, **caractérisé en ce que** la largeur (20) de la section (10) non circulaire est dans la plage de 0,1 à 20 mm, de préférence de 0,5 à 20 mm, idéalement de 1 à 5 mm, plus idéalement de 1,0 à 2,0 mm.

8. Procédé selon l'une quelconque des revendications précédentes, **caractérisé en ce que** la hauteur (30) de la section (10) non circulaire est dans la plage de 0,01 à 10 mm, de préférence de 0,15 à 5 mm, idéalement de 0,2 à 4 mm, plus idéalement de 0,25 à 4 mm.

9. Procédé selon l'une quelconque des revendications précédentes, **caractérisé en ce que** le ou les fils forment au moins partiellement un maillage, de préférence un maillage avec un motif d'armure.

10. Procédé selon la revendication 9, **caractérisé en ce que** le rapport entre la largeur (20) du fil et la distance entre les fils en chaîne et/ou en trame, de préférence en chaîne, est d'au moins 1:10, de préférence d'au moins 1:1, idéalement d'au moins 10:1, plus idéalement d'au moins 100:1.

11. Procédé selon l'une quelconque des revendications précédentes, **caractérisé en ce que** l'au moins une résine est appliquée sur le substrat sous la forme d'un support imprégné de résine.

12. Procédé selon l'une quelconque des revendications précédentes, **caractérisé en ce que** le substrat comprend au moins une couche constituée par une composition hydrophobe, de préférence sur une surface du substrat, idéalement sur la face supérieure du substrat.

13. Procédé de fabrication d'un matériau stratifié avec une structure de surface comprenant les étapes suivantes :
I. l'application d'au moins une résine sur un substrat,
II. la mise en contact d'un profilé avec la formation formée à l'étape I.,
III. l'application de chaleur et de pression à la formation formée à l'étape II.,
IV. le retrait du profilé,
**caractérisé en ce que** le profilé présente un motif d'armure et la surface du profilé en contact avec la formation de l'étape 1. est formée selon la surface de l'au moins un fil tel que défini dans l'une quelconque des revendications 1 à 10.
